# EUROPEAN PATENT APPLICATION

(11) **EP 3 056 809 A1**
(43) Date of publication of application: **17.08.2016**
(21) Application number: 16155582.6
(22) Date of filing: 12.02.2016
(51) Int. Cl.: F23B 80/02, F23B 80/04, F24H 9/00, F24H 9/18, F24D 5/08, F24H 3/04

(54) **HEATING PLANT WITH RADIANT DUCTS**

(30) Priority: 12.02.2015 IT PD20150036
(71) Applicant: Carlieuklima S.p.A., 33074 Fontanafredda (PN) (IT)
(72) Inventor: MARTOREL, Gastone, I-31020 San Fior (TV) (IT); CARLI, Vittorio, I-33080 Porcia (PN) (IT)
(74) Representative: Gallo, Luca

(57) **Abstract**

Heating plant with radiant ducts, which comprises: - at least one closed-loop radiant duct (2) susceptible to be fixed to the ceiling or to a wall of a room to be heated and adapted to be internally traversed by a heated carrier fluid (F), in order to heat such room by radiation; - at least one burner (3) associated with the radiant duct (2) and susceptible to burn a mixture of a fuel (C) and a comburent in order to generate, through a combustion reaction, high temperature combustion products (P) adapted to be mixed with the carrier fluid (F) which travels inside the radiant duct (2) in order to heat it; - first means (4) for supplying the fuel (C) connected to the burner (3) in order to supply it with the fuel (C); - second means (5) for supplying the comburent associated with the burner (3) in order to supply it with the comburent; - at least one first fan (6) connected to the radiant duct (2) downstream of the burner (3) and operating in induced draft in order to make the carrier fluid (F) circulate within the radiant duct (2).

The heating plant (1) is characterized in that the second means (5) for supplying the comburent comprise a supplying chamber (7), in which the burner (3) is partially housed, and a second fan (8) mounted on the supplying chamber (7) and adapted to draw air from the external environment in order to force, into the supplying chamber (7), a flow of comburent air (A) adapted to be received by the burner (3) and adapted to be mixed with the fuel (C) supplied to the latter by the first supplying means (4) in order to promote the combustion reaction.

## Description

### Field of application

The present invention refers to a heating plant with radiant ducts, according to the preamble of the main independent claim 1.

The present plant is intended to be employed in order to heat rooms, generally large-size and high-height settings, generally of buildings and more particularly of industrial and commercial buildings, such as sheds, warehouses, hangars, supermarkets, shopping malls or other buildings.

The plant according to the invention is therefore inserted in the thermo-technical field of production of heating and climate-control systems.

### State of the art

Heating plants with radiant ducts have for some time been known and used, especially industrially. Such heating plants comprise one or more closed-loop radiant ducts adapted to be fixed to the ceiling or to a wall of a room which one wishes to heat and susceptible to be internally traversed by a heated carrier fluid, such as in particular air mixed with burnt gases, as better explained hereinbelow, in order to heat the underlying setting, mainly by radiation.

The radiant ducts, also termed in the technical jargon of the field with the term of radiant strips, are constituted by metal (generally steel) piping, which are extended within the room to be heated with a length of several tens of meters and in particular also up to 100-150 meters.

Such known plants generally comprise a burner adapted to heat the carrier fluid which is made to flow within the radiant ducts. More in detail, the burner is inserted in a combustion chamber associated with the radiant ducts and is intended to be supplied with a fuel and with comburent air in order to attain a combustion reaction and develop hot fumes adapted to be introduced into the radiant ducts, heating the carrier fluid that flows therein. For such purpose, the known plants also usually comprise a fan, operating in induced draft, adapted to make the carrier fluid circulate in the radiant ducts.

A heating plant with radiant ducts of this known type is for example described in the patent IT 1266128. The plant described therein comprises a closed-loop radiant duct formed by a supply path and by a return path, connected to each other at the respective ends in order to allow the circulation of a carrier fluid, in particular air and burnt gases, at their interior. The plant also comprises a burner inserted in a combustion chamber, which is partially housed inside an initial section of the supply path of the radiant duct, first means for supplying fuel comprising jets of pressurized fuel gas connected to the burner in order to supply it with the fuel and second means for supplying a comburent, in particular air, associated with the burner in order to supply it with the comburent. More in detail, the second supplying means comprise a supplying chamber, communicating with the combustion chamber and with the external environment, through which comburent air coming from the external environment is suctioned into the burner.

The plant also comprises a fan operating in induced draft, which is arranged at the terminal section of the return path of the radiant duct, in proximity to the burner. The latter is in particular of atmospheric pressure type with multi-flame Venturi tubes. The fan of the plant described therein is adapted to suction the carrier fluid which traverses the supply path and the return path of the radiant duct and to insufflate part of such carrier fluid laterally with respect to the burner, in order to allow the recirculation thereof.

The comburent air coming from the external environment is suctioned into the burner due to the reduced pressure created by the jets of pressurized fuel gas within the burner and due to the reduced pressure created by the fan on the supply path of the radiant duct associated with the burner.

The main drawback of such known heating plant, described in the patent IT 1266128, lies in the risk that backfires can occur.

Indeed, if the reduced pressure created within the supply path of the radiant duct, and hence in the combustion chamber, by the fan which functions in induced draft is not sufficient, the burner is not capable of suctioning the quantity of comburent air necessary for burning the fuel supplied thereto, such that dangerous backfire phenomena occur, with the risk even of explosions.

In order to limit the risk of occurrence of such phenomena, the above-described known plants are equipped with a high-power fan, capable of ensuring the creation within the supply path of the radiant duct of a reduced pressure sufficient for ensuring the suction of sufficient quantities of comburent air. Nevertheless, this involves higher costs for the manufacturing of the plant, as well as higher maintenance and operating costs for the heating plant itself.

A further drawback of the heating plant described in the patent IT 1266128 lies in the fact that the supply and return paths of the radiant duct must have a geometry as linear as possible, in order to prevent possible tortuosity in such ducts from reducing the reduced pressure created by the fan in the supply path of the radiant duct and hence in the combustion chamber, facilitating the occurrence of backfire phenomena.

Heating plants are also known with radiant ducts comprising a blown-air burner, such as the plants described in the patents DE 3814897 and EP 0079526. The blown-air burner of each of such plants is supplied with a mixture of fuel and comburent air, which therefore reach the triggers of the burner itself already premixed. The flame generated by such blown-air burner is rather short, being developed over a limited space.

The latter known heating plants have the main drawback of requiring high production costs, since they must be equipped with a combustion chamber provided with optimal characteristics of resistance to the temperature swings that the chamber itself must be subjected during plant operation, and since they must be provided with a high-power fan adapted to generate the turbulence necessary for ensuring the complete mixing of the fuel and comburent air that are sent to the torches of the burner.

### Presentation of the invention

In this situation, therefore, the object of the present invention is to overcome the drawbacks of the abovementioned prior art by providing a heating plant with radiant ducts which is safe and entirely reliable in operation.

A further object of the present invention is to provide a heating plant with radiant ducts which is simple and inexpensive to achieve.

Another object of the present invention is to provide a heating plant with radiant ducts which requires simple and inexpensive maintenance.

A further object of the present invention is to provide a heating plant with radiant ducts which has low operating costs.

### Brief description of the drawings

The technical characteristics of the invention, according to the aforesaid objects, are clearly seen in the contents of the enclosed claims and the advantages thereof will be more evident in the following detailed description, made with reference to the enclosed drawings, which represent several merely exemplifying and non-limiting embodiments of the invention, in which:
- figure 1A shows a perspective view of a heating plant, object of the present invention, with several parts removed in order to better appreciate other parts;
- figure 1B shows a perspective view of an embodiment variant of the plant of figure 1A;
- figure 2 shows a section view of the heating plant of Fig. 1A, carried out along the plane π of the same figure.

### Detailed description

With reference to the enclosed drawings, reference number 1 overall indicates the heating plant, object of the present invention.

The heating plant 1 according to the invention is intended to be employed in order to heat large-cubature rooms, i.e. characterized by large surface areas and high heights, usually in industrial or commercial buildings, such as sheds, hangars, warehouses, supermarkets, shopping malls, cinemas or the like.

In particular, the plant 1 according to the present invention is intended to be installed in the room where it is desired to heat at a distance from the ground and with an orientation that is suitably selected in order to ensure the desired heating of a selected zone of the room.

The heating plant 1, object of the present invention, comprises one or more closed-loop radiant ducts 2, susceptible of being fixed to the ceiling or to a wall of a room to be heated, maintained suspended and spaced from the ground of the latter, and adapted to be internally traversed by a heated carrier fluid F, in order to heat the room itself by radiation.

Of course, the radiant ducts 2 of the plant 1, rather than being directly fixed to the ceiling or to a wall, can also be fixed to beams or to columns or to poles associated therewith or to any structure susceptible of safely supporting the radiant ducts 2 themselves and hence the plant 1, without departing from the protective scope defined by the present patent.

The aforesaid radiant ducts 2, also termed in the technical jargon of the field with the term radiant strips, are formed by metal ducts which are extended with a length of several tens of meters and in particular even up to 100-150 meters.

Advantageously, the aforesaid radiant ducts 2 are obtained starting from a continuous strip of metal material, e.g. of aluminate steel, which is formed as a spiral and fixed along its longitudinal edges in a manner so as to make a tubular body, according to production processes *per se* known to the man skilled in the art.

The plant 1 illustrated in the enclosed figures and described in detail hereinbelow comprises in particular a single closed-loop radiant duct 2, on which only a portion thereof is reported in the enclosed drawings. More in detail, the closed-loop radiant duct 2 of the plant 1 illustrated in the enclosed figures comprises a supply path 2' and a return path 2", connected to each other at the respective ends in order to allow the circulation of the carrier fluid F at their interior. Of course, the plant 1 can comprise two or more closed-loop radiant ducts 2 without departing from the protective scope defined by the present patent.

The plant 1 in accordance with the present invention also comprises one or more burners 3, and in particular in accordance with the embodiment illustrated in the enclosed figures only one burner 3. The latter is associated with the radiant duct 2, in particular with the supply path 2' of the radiant duct 2 as better explained hereinbelow, and is susceptible to burn a mixture of a fuel C and comburent air A in order to generate, through a combustion reaction, high temperature combustion products P adapted to be mixed with the carrier fluid F that internally traverses the radiant duct 2 in order to heat it.

The plant 1 is also provided with first means 4 for supplying the fuel C connected to the burner 3 in order to supply it with the fuel C. The latter can be in gaseous form and be constituted for example by methane, or it can be in liquefied form, and be constituted for example by LPG.

Second means 5 for supplying comburent air A are also provided, associated with the burner 3 in order to supply it with the comburent air A.

The plant 1 according to the invention also comprises at least one first fan 6 connected to the radiant duct 2 downstream of the burner 3 and operating in induced draft in order to make the carrier fluid F circulate in reduced pressure within the radiant duct 2 itself. In particular, the first fan 6 is arranged at the terminal section of the return path 2" of the radiant duct 2, in proximity to the burner 3 and downstream of the latter with respect to the direction of advancement of the carrier fluid F in the radiant duct 2. The first fan 6 is adapted to suction the carrier fluid F which traverses the supply path 2' and the return path 2" of the radiant duct 2 and to insufflate part of such carrier fluid F laterally with respect to the burner 3 in order to introduce it into the supply path 2' and hence allow the recirculation thereof.

The part of burnt gases suctioned by the first fan 6, and not sent laterally with respect to the burner 3 in order to close the loop of the carrier fluid, is sent to the chimney 30 and therefore is pressurized.

In particular, the first fan 6 is provided with a first suction mouth connected to the terminal section of the return path 2" of the radiant duct 2, and is provided with a first supply mouth connected in fluid relation to the supply path 2' of the radiant duct 2 and preferably also to the chimney 30.

Advantageously, the first fan 6 and the burner 3 are both housed in a support structure 10 with box-like shape, to which also the supply path 2' and the return path 2" of the radiant duct 2 are connected. More in detail, the supply path 2' of the radiant duct 2 is connected with its initial section to the support structure 10 at the burner 3 and the return path 2" of the radiant duct 2 is connected with its terminal section to the support structure 10 at the first fan 6.

In accordance with the idea underlying the present invention, the second means 5 for supplying comburent air A comprise a supplying chamber 7 in which the burner 3 is partially housed and a second fan 8, mounted on the supplying chamber 7 and adapted to draw air from the external environment in order to force into the supplying chamber 7 a flow of comburent air A adapted to be received by the burner 3 and adapted to be mixed in the burner 3, as better described hereinbelow, with the fuel C supplied thereto by the first supplying means 4 in order to promote the combustion reaction.

The presence of the second fan 8 adapted to insufflate air into the supplying chamber 7 and hence to provide comburent air to the burner 3 allows preventing the occurrence of backfire phenomena, substantially regardless of the power of the first fan 6 which operates in induced draft and regardless of the geometric configuration of the radiant duct 2. The second fan 8 is in fact able to continuously and safely provide, during the operation of the plant 1, comburent air in a quantity sufficient for ensuring the substantially complete combustion of the fuel introduced in the burner 3.

Preferably, the second fan 8 is arranged outside the supplying chamber 7.

Advantageously, the second fan 8 is provided with a second suction mouth through which the comburent air A is suctioned from the external environment, and with a second supply mouth connected to the supplying chamber 7 by means of an inlet opening of the latter, in order to introduce the comburent air A into the supplying chamber 7 itself.

In particular, the second supply mouth of the second fan 8 is provided with an end edge, preferably flanged, fixed to a wall of the supplying chamber 7 at the aforesaid inlet opening of the supplying chamber 7 itself.

Advantageously, the plant 1 according to the present invention comprises one or more combustion chambers 9, each associated with a corresponding burner 3. In accordance with the embodiment of the plant illustrated in the enclosed figures, the plant 1 comprises a combustion chamber 9 associated with the burner 3.

The combustion chamber 9 communicates, at a first end 9' thereof, with the supplying chamber 7 and, at a second end 9" thereof, with the interior of the radiant duct 2. In particular, the supplying chamber 7 is provided with an outlet opening through which it is connected to the aforesaid first end 9' of the combustion chamber 9.

Preferably, the combustion chamber 9 is extended from the supplying chamber 7 towards the interior of the supply path 2' of the radiant duct 2, being partially housed within an initial section of the supply path 2', in particular coaxially inserted in the latter.

Advantageously, the first end 9' of the combustion chamber 9 is inserted in the support structure 10, and is in particular positioned at the burner 3.

In the combustion chamber 9, the combustion reaction of the mixture of the fuel and comburent is susceptible to occur, promoted by the burner 3. The flow of comburent air A introduced into the supplying chamber 7 by the second fan 8 is adapted to be introduced into the combustion chamber 9, pushing the reaction products P exiting from the combustion chamber 9, through the second end 9" thereof, towards the interior of the radiant duct 2 and, in particular, towards the interior of the supply path 2' of the latter.

This facilitates the propagation of the high-temperature reaction products P along the radiant duct 2 and the mixing of the same with the carrier fluid reintroduced by the first fan 6 into the supply path 2' of the radiant duct 2 for the recirculation.

At the outlet of the combustion chamber 9, in fact, the combustion reaction products P are directly introduced into the supply path 2', in which also the recirculation carrier fluid flows.

In particular, a first portion of the flow of comburent air A introduced in the supplying chamber 7 by the second fan 8 is intended to be mixed with the fuel C in order to promote the combustion reaction and a second portion del flow of comburent air A is intended to carry the reaction products P towards the combustion chamber 9 exterior, pushing them towards the interior of the supply path 2' where they are adapted to be mixed with the recirculation carrier fluid.

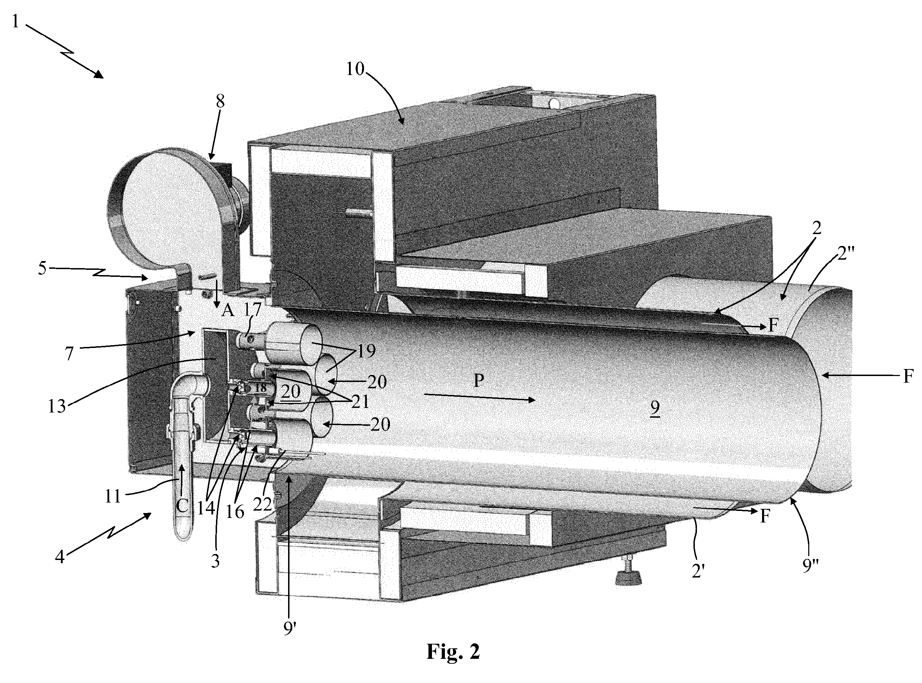

The burner 3 is at least partially inserted in the combustion chamber 9, as visible in the enclosed figure 2, in order to promote within the latter the combustion reaction of the mixture of fuel C and comburent air A. More in detail, the burner 3 is arranged between the supplying chamber 7 and the combustion chamber 9.

In particular, the burner 3 is partially inserted in the supplying chamber 7 and is partially inserted in the combustion chamber 9, being arranged to traverse the outlet opening of the supplying chamber 7 itself.

The supplying means 4 comprise one or more ducts 11 for supplying the fuel C, susceptible of being connected to an external fuel source. In particular, in the embodiment illustrated in the enclosed figures, the first supplying means 4 comprise a supply duct 11. A tap 12 is advantageously arranged on the supply duct 11; such tap 12 is adapted to intercept the flow of the fuel C along the supply duct 11 in which it is inserted.

The first supplying means 4 also comprise a manifold 13, arranged within the supplying chamber 7. The manifold 13 is advantageously connected to the supply duct 11 in order to receive the fuel C therefrom. The first supplying means 4 also comprise one or more injection nozzles 14, each of which connected to the manifold 13 and adapted to inject the fuel C into the burner 3, as is better explained hereinbelow.

Preferably the supply duct 11 comprises a plurality of branches 11', 11" and 11'" arranged in parallel, which are each intercepted by an adjustment valve 15 for the fuel C flow rate, adapted to regulate the flow of the fuel C towards the manifold 13.

In accordance with the preferred embodiment of the heating plant 1 illustrated in the enclosed figures, the burner 3 comprises one or more flame tips 16, each of which provided with a collar 17, provided with a through cavity 18 in which a corresponding injection nozzle 14 is inserted, for injecting the fuel C within the through cavity 18, and provided with a hollow burning head 19, which is at least partially inserted in the combustion chamber 9 and is provided with a concavity 20 communicating with the through cavity 18 of the collar 17 and facing towards the interior of the combustion chamber 9. On the flame tip 16, and in particular on the burning head 19 of the latter, one or more through holes 21 are obtained that are adapted to place the supplying chamber 7 in air communication with the through cavity 18 and/or with the concavity 20, in order to make part of the comburent air A enter into the flame tip 16 in order to mix such comburent air A with the fuel C injected by the corresponding nozzle 14. In particular, the aforesaid through holes 21 are obtained at least on the burning head 19 of the corresponding flame tip 16 in order to place the supplying chamber 7 in air communication at least with the concavity 20.

Advantageously, the second fan 6 is arranged for determining, in the supplying chamber 7, a pressure of the flow of comburent air A lower than the pressure of the flow of fuel C which the first supplying means 4 determine in the flame tips 16 of the burner 3. In this manner in particular, the flow of fuel C within the flame terminations 6 suctions, within the latter part, the comburent air A through the aforesaid through holes 21.

The burner 3 also comprises one or more triggers 22 for igniting the flame tips 16, and preferably a single trigger which is advantageously only provided on one of the flame tips 16 of the burner 3.

In operation, the flow of comburent air A insufflated by the second fan 8 into the supplying chamber 7 is forced to enter into the combustion chamber 9 through the through holes 21 made on the burning heads 19 of the flame tips 16 and through the interstices that remain between the flame tips 16 and between the latter and the first end 9' of the combustion chamber 9. In particular, the comburent air starts to be mixed with the fuel C injected by the nozzles 14 in the flame tips 16 already in the concavities 20 of each or the burning heads 19 of the flame tips 16.

In the plant 1 in accordance with the present invention, the comburent which supplies the burner 3 is advantageously and only supplied by the second supplying means 5 and it is constituted by the flow of comburent air A introduced into the supplying chamber 7 by the second fan 8 and therefore does not comprise the recirculation carrier fluid F. The latter intervenes in the combustion only at the outlines of the combustion chamber 9, being mixed with the combustion products P and with the residual fuel and comburent downstream of the combustion chamber 9, i.e. beyond the second end 9" thereof.

Advantageously, after the comburent air A has been introduced by the second fan 8 into the supplying chamber 7, a part of the comburent air A enters into the burner 3 (in particular as specified above) and another part of the comburent air A enters into the combustion chamber 9 (through the outlet opening of the supplying chamber 7), hence flowing downstream of the burner 2, in a manner such to be mixed with the fuel C in the combustion chamber 9 downstream of the burner 2.

In particular, the flow of comburent air A, or at least the portion thereof that enters into the combustion chamber 9, and the fuel C supplied to the burner 3 by the first supplying means 4, are susceptible of being mixed together along the combustion chamber 9, facilitating the lengthwise development of the flame along the combustion chamber 9 itself; such flame advantageously terminates outside the combustion chamber 9 (beyond the second end 9" thereof), in particular being propagated within the supply path 2' of the radiant duct 2.

The fact that the flame produced by the burner 3 is developed lengthwise along the combustion chamber 9 allows reducing the temperature swings to which the combustion chamber 9 itself is subjected; hence, the combustion chamber 9 does not have to have particular technical characteristics of resistance to temperature swings, as is instead necessary if blown-air burners are employed. Hence, this allows reducing the production costs of the heating plant 1 according to the invention.

The flame produced by the burner 3, developed with a length as indicated above, exits outward from the combustion chamber 9, through the second end 9" thereof, being introduced into the supply path 2' of the radiant duct 2 surrounded by the recirculation carrier fluid F. The latter, having a lower oxygen content than that necessary for complete combustion, causes a reduction of the flame temperature and hence a reduction of the quantity of nitrogen oxides (NOₓ) and mixtures thereof present in the heated carrier fluid F.

The plant 1 according to the invention therefore allows containing the release of pollutant agents.

The flow of comburent air A insufflated by the second fan 8 into the supplying chamber 7 and, consequently, into the combustion chamber 9 therefore facilitates a lengthwise development of the flame generated by the burner 3 and therefore also facilitates the post-combustion of the recirculation carrier fluid F, with the above-indicate advantages. The recirculation carrier fluid F in fact comprises air heated with the combustion fumes and containing a residual amount of oxygen at it interior; such residual oxygen contributes to the combustion and, since it is present in limited quantity in the recirculation carrier fluid F, it facilitates the further elongation of the flame generated by the burner since the latter is not capable of burning all the residual oxygen in an immediate manner, but is driven by the carrier fluid F and by the combustion products P, burning the residual oxygen along the path.

The flow of comburent air A forced by the second fan 8 into the combustion chamber 9, therefore, acts in a synergistic manner with the recirculation carrier fluid F in order to facilitate an elongation of the flame and in order to facilitate the post-combustion of the recirculation carrier fluid F.

Advantageously, the second fan 8 absorbs a maximum power of about 200 W and preferably of about 100 W. Indeed it is not necessary for the second fan 8 to have a particularly high power, since the latter only has the purpose of pushing a flow of comburent air A towards the interior of the combustion chamber 9 through the burner 3 in order to ensure a sufficient supply of comburent air and prevent therewith the occurrence of backfire phenomena.

The presence of the second fan 8 having the above-indicated power, therefore, does not have a significant effect on the production and operating costs of the plant 1 according to the present invention. Rather, the presence of the second fan 8 ensures an optimal safety in the operation of the plant 1, even if the supply 2' and return 2" paths of the recirculation radiant duct 2 do not have a linear geometry, but have for example some curvature.

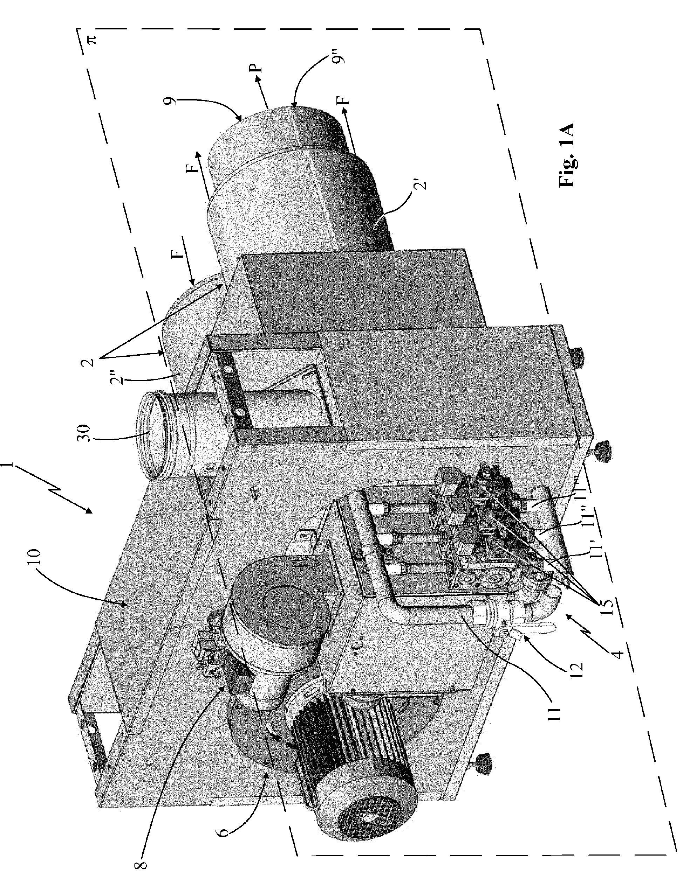

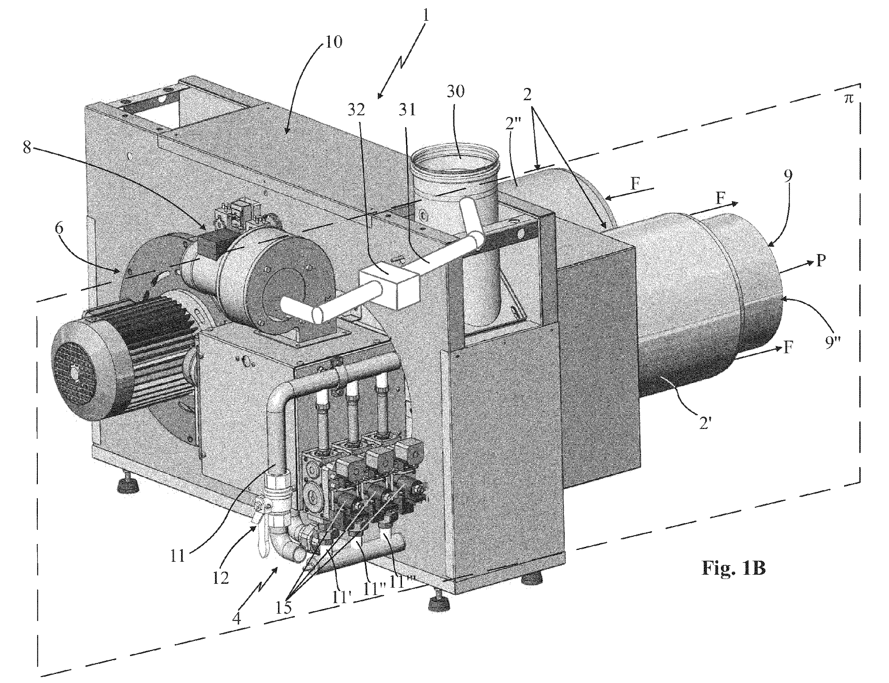

In accordance with a further embodiment of the invention illustrated in figure 1B, the suction of the second fan 8 is connected by means of a connection duct 31 to the chimney 30, in order to recover part of such flow rate of still-hot burnt gases. Advantageously such connection duct is intercepted by a shutter 32 with manual or automated regulation.

The first fan 6 is adapted to suction the carrier fluid F which traverses the supply path 2' and the return path 2" of the radiant duct 2 and to insufflate part of such carrier fluid F laterally with respect to the burner 3 in order to reintroduce it into the supply path 2' and hence allow the recirculation thereof.

The finding thus conceived therefore attains the pre-established objects.

## Claims

1. Heating plant with radiant ducts which comprises:
at least one closed-loop radiant duct (2) susceptible to be fixed to the ceiling or to a wall of a room to be heated and adapted to be internally traversed by a heated carrier fluid (F), in order to heat said room by radiation; said closed-loop radiant duct (2) comprising a supply path (2') and a return path (2"), connected to each other at the respective ends in order to allow the circulation of said carrier fluid (F) at the interior thereof;
at least one burner (3) associated with said at least one radiant duct (2) and susceptible to burn a mixture of a fuel (C) and comburent air (A) in order to generate, through a combustion reaction, high temperature combustion products (P) adapted to be mixed with said carrier fluid (F) in order to heat it;
first means (4) for supplying said fuel (C) connected to said at least one burner (3) in order to supply it with said fuel (C);
second means (5) for supplying said comburent air (A) associated with said at least one burner (3) in order to supply it with said comburent air (A);
at least one first fan (6) connected to said at least one radiant duct (2) downstream of said at least one burner (3) and operating in induced draft in order make said carrier fluid (F) circulate within said at least one radiant duct (2);
**characterized in that** said second means (5) for supplying said comburent air (A) comprise a supplying chamber (7) in which said at least one burner (3) is partially housed and a second fan (8) mounted on said supplying chamber (7) and adapted to draw said comburent air (A) from the external environment in order to force, into said supplying chamber (7), a flow of comburent air (A) adapted to be received by said at least one burner (3) and adapted to be mixed in said burner (3) with the fuel (C) supplied to said burner (3) by said first supplying means (4) in order to promote said combustion reaction;
said heating plant comprising at least one combustion chamber (9), which is extended from said supplying chamber (7) towards the interior of the supply path (2') of said radiant duct (2), is partially housed inside an initial section of said supply path (2') and communicates, at a first end (9') thereof, with said supplying chamber (7) and, at a second end (9") thereof, with the interior of said at least one radiant duct (2); in said combustion chamber (9), said combustion reaction of the mixture of said fuel and said comburent air (A) is susceptible to occur, promoted by said at least one burner (3).

2. Heating plant according to claim 1, **characterized in that** said second fan (8) is provided with a second suction mouth, through which said second fan (8) is adapted to suction said comburent air (A) from the external environment, and with a second supply mouth connected to said supplying chamber (7) by means of an inlet opening of said supplying chamber (7), and through such second supply mouth, said second fan (8) is adapted to introduce said comburent air (A) in said supplying chamber (7).

3. Heating plant according to claim 1 or 2, **characterized in that** said second fan (8) is arranged outside said supplying chamber (7).

4. Heating plant according to any one of the preceding claims, **characterized in that** said burner (3) is at least partially inserted in said combustion chamber (9) in a manner such to promote the combustion reaction of said mixture of fuel (C) and comburent air (A) within said combustion chamber (9).

5. Heating plant according to claim 4, **characterized in that** said supplying chamber (7) is provided with an outlet opening through which it is connected to the first end (9') of said combustion chamber (9),
said burner (3) being partially inserted in said supplying chamber (7) and partially inserted in said combustion chamber (9), and being arranged to traverse the outlet opening of said supplying chamber (7).

6. Heating plant according to any one of the preceding claims, **characterized in that** said first fan (6) and said burner (3) are both housed in a support structure (10) with box-like shape, to which said supply path (2') and said return path (2") of said radiant duct (2) are connected.

7. Heating plant according to claim 6, **characterized in that** the first end (9') of said combustion chamber (9) is inserted in said support structure (10).

8. Heating plant according to any one of the preceding claims, **characterized in that** said first supplying means (4) comprise at least one duct (11) for supplying said fuel (C) susceptible of being connected to an external fuel source, a manifold (13) arranged within said supplying chamber (7) and connected to said supply duct (11) in order to receive said fuel (C) therefrom and at least one injection nozzle (14) connected to said manifold (13) and adapted to inject said fuel (C) into said burner (3).

9. Heating plant according to claim 8, **characterized in that** said burner (3) comprises at least one flame tip (16) provided with a collar (17) provided with a through cavity (18) in which said at least one nozzle (14) is inserted for the injection of said first supplying means (4) and provided with a hollow burning head (19), which is at least partially inserted in said combustion chamber (9) and is provided with a concavity (20) communicating with the through cavity (18) of said collar (17) and facing towards the interior of the combustion chamber (9); on said flame tip (16), at least one through hole (21) being obtained that is adapted to place said supplying chamber (7) in air communication with said through cavity (18) and/or with said concavity (20).

10. Heating plant according to any one of the preceding claims, **characterized in that** said second fan (8) absorbs a maximum power of about 200W.

11. Heating plant according to any one of the preceding claims, **characterized in that** said flow of comburent air (A) and the fuel (C) supplied to said burner (3) by said first supplying means (4) are susceptible of being mixed with each other along the combustion chamber (9), facilitating the lengthwise development of the flame along the combustion chamber (9) itself.

12. Heating plant according to any one of the preceding claims, **characterized in that** said first fan (6) sends part of the suctioned burnt gasses to an expulsion chimney (30) and **characterized in that** it comprises a connection duct (31) which connects the suctioning element of said second fan (8) to said chimney (30).

13. Heating plant according to claim 12, **characterized in that** said connection duct (31) is intercepted by a shutter (32).
